# EUROPÄISCHE PATENTANMELDUNG

(11) **EP 4 516 586 A1**
(43) Veröffentlichungstag der Anmeldung: **05.03.2025**
(21) Anmeldenummer: 24195276.1
(22) Anmeldetag: 20.08.2024
(51) Int. Cl.: B60P 3/36

(54) **FREIZEITFAHRZEUG MIT EINER TISCHPLATTE**

(30) Priorität: 25.08.2023 DE 102023122934
(71) Anmelder: Bürstner GmbH & CO. KG, 77694 Kehl (DE)
(72) Erfinder: Kasteleiner, Alexander, 86926 Greifenberg (DE); Kromer, Jens, 77855 Achern (DE); Sackers, Olaf, 72172 Sulz (DE)
(74) Vertreter: Müller Schupfner & Partner Patent- und Rechtsanwaltspartnerschaft mbB (Muc)

(57) **Zusammenfassung**

Freizeitfahrzeug (1), insbesondere Wohnmobil und/oder Campervan und/oder ein auf einem Hochdachkombi basierendes Freizeitfahrzeug, mit einem Heckraum (15) und einer im Heckraum (15) angeordneten Ablageeinrichtung (2). Vorgeschlagen wird, dass eine Tischplatte (25) vorgesehen ist, die in der Ablageeinrichtung (2) geführt angeordnet ist, und dass die Tischplatte (25) in und/oder entgegen der Fahrtrichtung (26) zumindest teilweise aus der Ablageeinrichtung (2) ziehbar ist, wobei die Tischplatte (25) in der Ablageeinrichtung (2) geführt bleibt.

## Beschreibung

Die Erfindung betrifft ein Freizeitfahrzeug, insbesondere ein Wohnmobil und/oder einen Campervan. Speziell betrifft die Erfindung ein auf einem Hochdachkombi basierendes Freizeitfahrzeug.

Aus der DE 102 40 038 A1 ist ein Fahrzeug mit einem Lademodul bekannt. Hierbei kann das Lademodul als Kasten ausgebildet sein. Das Lademodul ist von der Heckseite des Fahrzeugs in das Fahrzeug einschiebbar. Das Lademodul kann ein Rolloelement aufweisen, welches ein großflächiges Öffnen des Lademoduls erlaubt, so dass ein komfortables Be- und Entladen des Fahrzeugs möglich ist.

Das aus der DE 102 40 038 A1 bekannte Fahrzeug hat den Nachteil, dass das Lademodul nicht einfach von einem Nutzer aus dem Heck gezogen werden kann, wenn es beladen ist, da es hierfür im beladenen Zustand zu schwer sein kann. Daher ist der Zugriff auf die in dem Lademodul enthaltenen Gegenstände umständlich. Somit ist die Eignung gerade für Freizeitzwecke gering.

Wenn der Innenraum des Freizeitfahrzeugs besonders begrenzt ist, dann sind Einrichtungen, wie eine Arbeitsplatte für ein Küchenmodul, nicht oder nur in geringem Umfang realisierbar, wenn zugleich Stauraum für sperrige Güter benötigt wird. Ferner ergeben sich dann Einschränkungen bei der Benutzung.

Aufgabe der Erfindung ist es, ein Freizeitfahrzeug anzugeben, das verbessert ausgestaltet ist. Insbesondere ist es eine Aufgabe der Erfindung ein Freizeitfahrzeug anzugeben, bei dem bei einem besonders begrenzten Innenraum des Freizeitfahrzeugs eine verbesserte Nutzung möglich ist.

Die Aufgabe wird durch eine Freizeitfahrzeug mit den Merkmalen des unabhängigen Patentanspruchs 1 gelöst. Vorteilhafte Weiterbildung der Erfindung sind in den Unteransprüchen angegeben.

Die Aufgabe wird durch ein Freizeitfahrzeug, insbesondere ein Wohnmobil und/oder einen Campervan und/oder ein auf einem Hochdachkombi basierendes Freizeitfahrzeug, mit einem Heckraum und einer im Heckraum angeordneten Ablageeinrichtung, gelöst, wobei eine Tischplatte vorgesehen ist, die in der Ablageeinrichtung geführt angeordnet ist, und wobei die Tischplatte in und/oder entgegen der Fahrtrichtung zumindest teilweise aus der Ablageeinrichtung ziehbar ist, wobei die Tischplatte in der Ablageeinrichtung geführt bleibt.

Der Begriff der Tischplatte ist allgemein zu verstehen. Insbesondere kann die Tischplatte zum Essen, zum Arbeiten, zur Zubereitung von Speisen, für Bürotätigkeiten, zum Spielen und zum Abstellen von Gegenständen, insbesondere Geschirr, genutzt werden.

Vorteilhaft ist es, dass zumindest eine Schiene, insbesondere eine Profilschiene, vorgesehen ist, die an der Ablageeinrichtung befestigt ist, und dass die Tischplatte an der zumindest einen Schiene geführt ist. Hierdurch ist eine komfortable Nutzung möglich. Insbesondere ist der Aufwand zur Nutzung gering.

Vorteilhaft ist es, dass die Tischplatte aus der Ablageeinrichtung entnehmbar ist. Dadurch kann der Einsatzbereich vergrößert werden.

Vorteilhaft ist es, dass die Tischplatte in einem vor einer Rücksitzbank oder vor Einzelsitzen im Fond vorgesehenen vorderen Innenraum zumindest näherungsweise horizontal anordenbar ist. Dadurch kann die Tischplatte im Freizeitfahrzeug die zusätzliche Funktion eines Tisches ermöglichen.

Vorteilhaft ist es, dass die Tischplatte über einer Mittelkonsole anordenbar ist. Hierdurch ist eine komfortable Nutzung möglich.

Vorteilhaft ist es, dass die Tischplatte zumindest mittelbar an der Mittelkonsole befestigbar ist. Dadurch ist eine zuverlässige ortsfeste Anordnung möglich, so dass beispielsweise beim Essen die Teller oder abgestellte Getränke ausreichend still stehen, auch wenn eine Person den Tisch horizontal oder vertikal belastet.

Vorteilhaft ist es auch, dass die Tischplatte auf der Mittelkonsole, insbesondere einer zwischen dem Fahrersitz und dem Beifahrersitz angeordneten Mittelkonsole, in einer Benutzungsstellung befestigbar ist. Die Mittelkonsole weist eine besonders geeignete Höhe auf. Durch gegebenenfalls an der Mittelkonsole vorgesehene Lüftungsschlitze ist eine Kühlung der Tischplatte möglich. Es ist im übrigen auch denkbar, diese Anordnung der Tischplatte auch völlig unabhängig von dem zuvor genannten Ausführungsformen und Merkmalen, insbesondere auch unabhängig von einer im Heckraum angeordneten Ablageeinrichtung beziehungsweise unabhängig von einer Ausgestaltung, bei der die Tischplatte in solch einer Ablageeinrichtung geführt angeordnet ist und in und/oder entgegen der Fahrtrichtung zumindest teilweise aus der Ablageeinrichtung ziehbar ist, wobei die Tischplatte in der Ablageeinrichtung geführt bleibt, zu beanspruchen.

Vorteilhaft ist es, dass zum Befestigen der Tischplatte an der Mittelkonsole in die geöffnete Mittelkonsole eine Befestigungseinrichtung eingefügt wird, mittels der der die Tischplatte an der Mittelkonsole abgestützt ist, und dass die Tischplatte mit der Befestigungseinrichtung lösbar verbunden ist. Somit kann mit geringem Aufwand eine temporäre Befestigung realisiert werden.

Vorteilhaft ist es, dass ein Fahrersitz und/oder ein Beifahrersitz entgegen der Fahrtrichtung anordenbar ist und dass zumindest ein Segment einer Rücksitzbank oder zumindest ein Einzelsitz im Fond und der Fahrersitz und/oder der Beifahrersitz eine Sitz-Ess-Gruppe, insbesondere eine Halbdinette, bilden. Dadurch ist eine vorteilhafte Nutzung von mehreren Personen möglich.

Vorteilhaft ist es, dass der Fahrersitz und/oder der Beifahrersitz mittels eines Dreh-Heb-Mechanismus aus einer Stellung in der Fahrtrichtung in eine Stellung entgegen der Fahrtrichtung verstellbar ist. Dadurch kann ein Umbau zur Halbdinette einfach gestaltet werden.

Vorteilhaft ist es, dass eine segmentweise umklappbare Rücksitzbank oder Einzelsitze im Fond vorgesehen sind und dass die Tischplatte über ein umgeklapptes Segment der Rücksitzbank oder einen im Fond umgeklappten Einzelsitz ziehbar ist. Dadurch ist eine schnell zur Verfügung stehende Nutzung der Tischplatte möglich, da diese lediglich ausgezogen werden muss.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer modularen Anordnung entsprechend einem ersten Ausführungsbeispiel in einer schematischen, auszugsweisen, räumlichen Darstellung, wobei eine Ansicht von schräg hinten bei geöffneter Heckklappe dargestellt ist, in der eine Tischplatte in eine Ablageeinrichtung eingeschoben ist;
- Fig. 2: eine auszugsweise, räumliche Darstellung des in Fig. 1 gezeigten Freizeitfahrzeugs des ersten Ausführungsbeispiels, wobei Schienen für die Tischplatte ausgezogen sind und die Tischplatte entnommen ist;
- Fig. 3: das in Fig. 1 gezeigte Freizeitfahrzeug des ersten Ausführungsbeispiels in einer schematischen, geöffneten, auszugsweisen, räumlichen Darstellung von schräg oben, wobei die Tischplatte im Innenraum vor einer Rücksitzbank montiert ist;
- Fig. 4A: ein Detail des in Fig. 3 gezeigten Freizeitfahrzeugs, wobei eine Mittelkonsole gezeigt ist, an beziehungsweise über der die Tischplatte montierbar ist, wobei zur Vereinfachung der Darstellung die Tischplatte nicht gezeigt ist;
- Fig. 4B: ein Detail des in Fig. 3 gezeigten Freizeitfahrzeugs, wobei ein Dreh-Hub-Mechanismus zum Anordnen eines Beifahrersitzes entgegen der Fahrtrichtung veranschaulicht ist;
- Fig. 4C: ein Detail des in Fig. 3 gezeigten Freizeitfahrzeugs, wobei der Dreh-Hub-Mechanismus zum Anordnen eines Beifahrersitzes entgegen der Fahrtrichtung veranschaulicht ist;
- Fig. 5: ein Freizeitfahrzeug entsprechend einem zweiten Ausführungsbeispiel in einer auszugsweisen, geöffneten, räumlichen Darstellung, wobei eine Tischplatte in eine im Heckraum angeordnete Ablageeinrichtung eingeschoben ist; und
- Fig. 6: das in Fig. 5 gezeigte Freizeitfahrzeug des zweiten Ausführungsbeispiels in einer auszugsweisen, geöffneten, räumlichen Darstellung, wobei die Tischplatte ausgezogen ist.

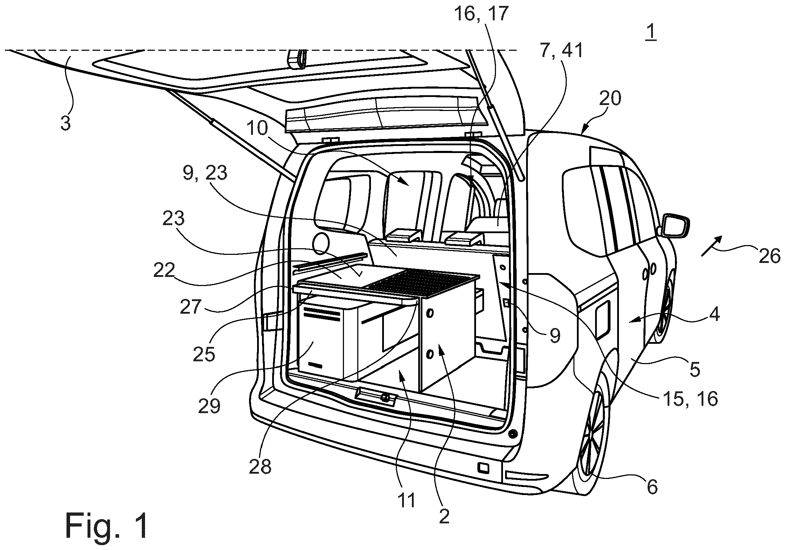

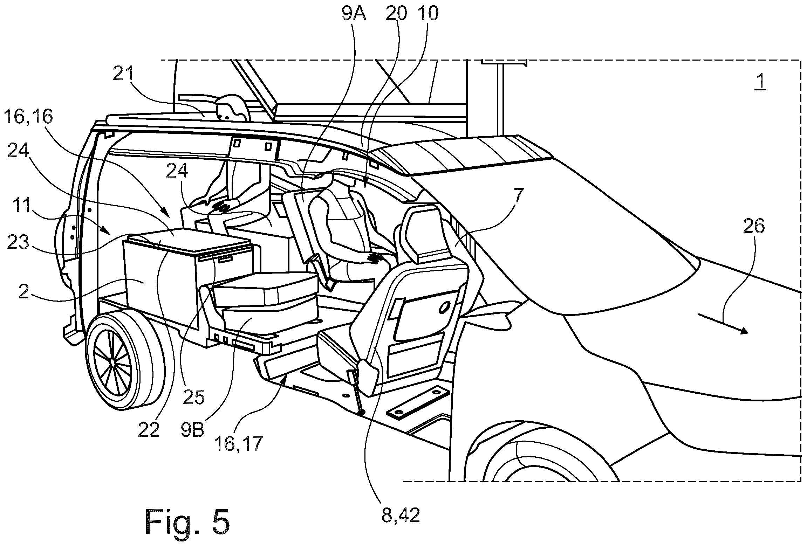

Fig. 1 zeigt ein Freizeitfahrzeug 1 mit einer Ablageeinrichtung 2 entsprechend einem Ausführungsbeispiel in einer schematischen, räumlichen Darstellung, wobei eine Ansicht von schräg hinten bei geöffneter Heckklappe 3 dargestellt ist. Das Freizeitfahrzeug 1 kann auf einem Basisfahrzeug 4 basieren. Als Basisfahrzeug 4 dient in diesem Ausführungsbeispiel ein Hochdachkombi. Dadurch kann das Freizeitfahrzeug 1 mit reduziertem Herstellungsaufwand hergestellt werden. Um die Herstellungskosten zu optimieren, werden hierbei insbesondere die Karosserie 5, das Fahrwerk 6, der Fahrersitze 7, der Beifahrersitz 8, die Rücksitzbank 9 beziehungsweise Einzelsitze 9A, 9B im Fond 10 (Fig. 5) übernommen. Die Heckklappe 3 ist vorzugsweise die Heckklappe 3 des Basisfahrzeugs 4.

Das Freizeitfahrzeug 1 weist eine modulare Anordnung 11 auf, die die Ablageeinrichtung 1 umfasst. Die modulare Anordnung ist in einem Heckraum 15 des Freizeitfahrzeugs 1 angeordnet. Hierbei ist der Heckraum 15 als Teil eines Innenraums 16 des Freizeitfahrzeugs 1 hinter der Rücksitzbank 9 beziehungsweise den Einzelsitzen 9A, 9B (Fig. 5) im Fond 10 realisiert. Ferner ist ein vorderer Innenraum 17 vor der Rücksitzbank 9 beziehungsweise vor den Einzelsitzen 9A, 9B als Teil des Innenraums 16 gegeben.

Es sind auch geeignete Modifikationen des Basisfahrzeugs 4 möglich. Beispielsweise kann an einem Dach 20 ein geeigneter Dachausschnitt 21 (Fig. 5) vorgesehen sein, um dort eine größere Höhe zu ermöglichen.

Die Ablageeinrichtung 2 weist eine Ablageplatte 22 auf, an der eine Ablagefläche 23 gebildet ist. Auf der Ablagefläche 23 können Gegenstände abgelegt und transportiert werden. Ferner kann auf der Ablagefläche 23 auch ein Sitzkissen 24 (Fig. 5) angeordnet sein, damit eine Person auf der Ablageeinrichtung 2 sitzen kann.

Das Freizeitfahrzeug 1 weist eine Tischplatte 25 auf, die in Fig. 1 in die im Heckraum 15 angeordneten Ablageeinrichtung 2 eingeschoben ist.

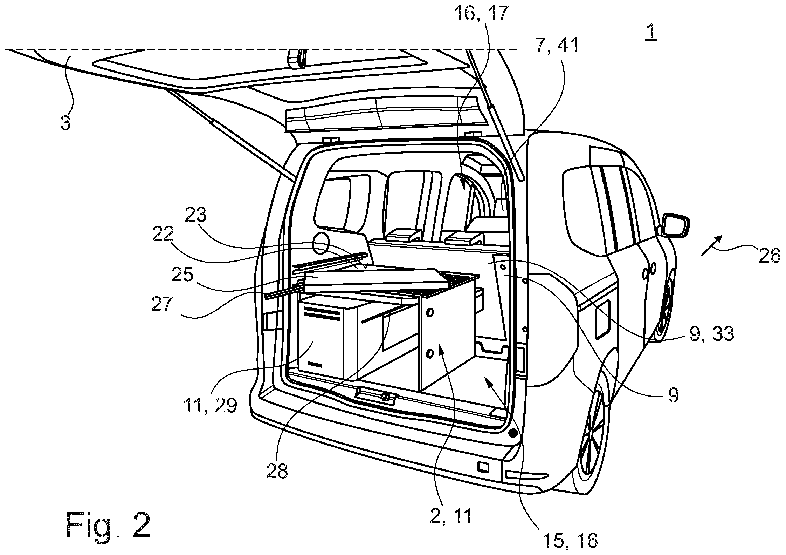

Die Ausgestaltung des Freizeitfahrzeugs 1 des ersten Ausführungsbeispiels ist im folgenden auch unter Bezugnahme auf Fig. 2 bis 3 und Fig. 4A, 4B, 4C weiter besch rieben.

Fig. 2 zeigt eine auszugsweise, räumliche Darstellung des in Fig. 1 gezeigten Freizeitfahrzeugs 1 des ersten Ausführungsbeispiels, wobei Schienen 27, 28 für die Tischplatte 25 ausgezogen sind und die Tischplatte 25 entnommen ist.

Die Tischplatte 25 ist in der Ablageeinrichtung 2 geführt angeordnet ist. Hierbei kann je nach Ausgestaltung die Tischplatte 25 in und/oder entgegen der Fahrtrichtung 26 zumindest teilweise aus der Ablageeinrichtung 2 gezogen werden, wobei die Tischplatte 25 in der Ablageeinrichtung 2 geführt bleibt. In diesem Ausführungsbeispiel erfolgt die Führung mittels der Schienen 27, 28, die als Profilschienen 27, 28 ausgebildet sind. Die Schienen 27, 28 sind an der Ablageeinrichtung 2 befestigt. Wenn die Tischplatte 25 an der Ablageeinrichtung 2 genutzt wird, dann ist die Tischplatte 25 an den Schienen 27, 28 geführt, wodurch eine Abstützung gegeben ist. Dies ermöglicht insbesondere das Abstellen von Geschirr, insbesondere Gläsern, und die Zubereitung von Speisen.

Beispielsweise kann in der Ablageeinrichtung 2 ein Küchenmodul 29 der modularen Anordnung 11 angeordnet sein, das ausziehbar ist. Die ausgezogene Tischplatte 25 kann dann bei der Nutzung des Küchenmoduls 29 ebenfalls genutzt werden.

Die Tischplatte 25 kann unter der Ablageplatte 22 angeordnet sein, wie es in Fig. 1 gezeigt ist, so dass ein platzsparendes Verstauen möglichen ist, wobei die Tischplatte 25 horizontal angeordnet ist. Die Tischplatte 25 kann ganz oder teilweise unter der Ablageplatte 22 herausgezogen werden, wobei sie durch die Schienen 27, 28 geführt bleibt, so dass die Tischplatte 25 horizontal ausgerichtet ist. Dadurch kann die Tischplatte 25 genutzt werden, auch wenn die Ablagefläche 23 belegt ist.

Wie in Fig. 2 gezeigt ist, ist die Tischplatte 25 aus der Ablageeinrichtung 2 entnehmbar. Dadurch ergeben sich weitere Möglichkeiten der Nutzung.

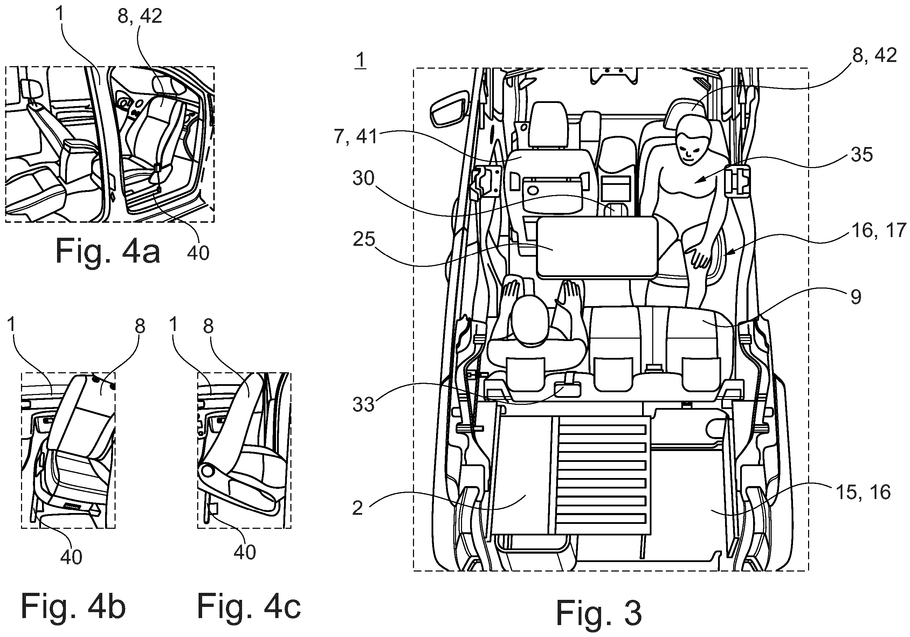

Fig. 3 zeigt das in Fig. 1 gezeigte Freizeitfahrzeug 1 des ersten Ausführungsbeispiels in einer schematischen, geöffneten, auszugsweisen, räumlichen Darstellung von schräg oben, wobei die Tischplatte 25 im Innenraum 16 vor der Rücksitzbank 9 montiert ist. Hierbei ist die Tischplatte 25 in dem vor einer Rücksitzbank 9 vorgesehenen vorderen Innenraum 17 zumindest näherungsweise horizontal angeordnet.

Entsprechend kann bei einer abgewandelten Ausgestaltung die Tischplatte 25 in dem vor Einzelsitzen 9A, 9B (Fig. 5) im Fond 10 vorgesehenen vorderen Innenraum 17 zumindest näherungsweise horizontal angeordnet sein.

Die Tischplatte 25 ist über einer Mittelkonsole 30 (Fig. 4A) angeordnet, so dass die Tischplatte zentral angeordnet und von allen Sitzplätzen 7, 8, 9, 9A, 9B (Fig. 5) aus gut zugänglich ist. Hierbei ist die Tischplatte 25 vorzugsweise an der Mittelkonsole 30 befestigt, um eine zuverlässige Abstützung zu erzielen.

Beispielsweise kann zum Befestigen der Tischplatte 25 an der Mittelkonsole 30 in die geöffnete Mittelkonsole 30 eine Befestigungseinrichtung eingefügt werden. Dann kann die Tischplatte 25 über die Befestigungseinrichtung an der Mittelkonsole 30 abgestützt werden. Vorzugsweise ist die Tischplatte 25 hierbei mit der Befestigungseinrichtung lösbar verbunden.

Der Fahrersitz 7 und/oder der Beifahrersitz 8 können entgegen der Fahrtrichtung 26 angeordnet werden. Dadurch kann zusammen mit einerseits zumindest einem Segment 33 einer Rücksitzbank 9 oder zumindest einem Einzelsitz 9A, 9B im Fond 10 sowie andererseits dem Fahrersitz 7 und/oder dem Beifahrersitz 8 eine Sitz-Ess-Gruppe 35, insbesondere eine Halbdinette 35, realisiert werden.

Fig. 4A zeigt ein Detail des in Fig. 3 gezeigten Freizeitfahrzeugs 1, wobei die Mittelkonsole 30 gezeigt ist, an und über der die Tischplatte 25 montiert ist, wobei zur Vereinfachung der Darstellung die Tischplatte 25 in Fig. 4A nicht gezeigt ist. Ferner zeigt Fig. 4B ein Detail des in Fig. 3 gezeigten Freizeitfahrzeugs 1, wobei ein Dreh-Hub-Mechanismus 40 zum Anordnen des Beifahrersitzes 8 entgegen der Fahrtrichtung 26 veranschaulicht ist. Außerdem zeigt Fig. 4C ein Detail des in Fig. 3 gezeigten Freizeitfahrzeugs 1, wobei der Dreh-Hub-Mechanismus 40 zum Anordnen des Beifahrersitzes 8 entgegen der Fahrtrichtung 26 veranschaulicht ist. Ein Hub-Drehen des Fahrersitzes 7 erfolgt gegebenenfalls spiegelbildlich.

Somit können der Fahrersitz 7 und/oder der Beifahrersitz 8 mittels des jeweiligen Dreh-Heb-Mechanismus 40 aus einer Stellung 41 in der Fahrtrichtung 26 in eine Stellung 42 entgegen der Fahrtrichtung 26 verstellt werden. Da hierzu keine Demontage des Fahrersitzes 7 beziehungsweise des Beifahrersitzes 8 nötig ist, kann dies von einem Nutzer durchgeführt werden.

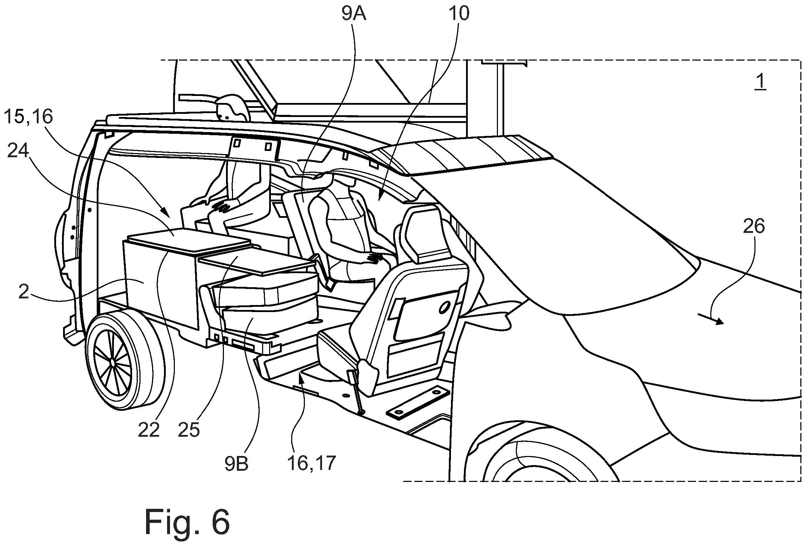

Fig. 5 zeigt ein Freizeitfahrzeug 1 entsprechend einem zweiten Ausführungsbeispiel in einer auszugsweisen, geöffneten, räumlichen Darstellung, wobei die Tischplatte 25 in die im Heckraum 15 angeordnete Ablageeinrichtung 2 eingeschoben ist. Ferner zeigt Fig. 6 das in Fig. 5 gezeigte Freizeitfahrzeug 1 des zweiten Ausführungsbeispiels in einer auszugsweisen, geöffneten, räumlichen Darstellung, wobei die Tischplatte 25 ausgezogen ist.

In diesem Ausführungsbeispiel sind Einzelsitze 9A, 9B im Fond 10 vorgesehen. Die Tischplatte 25 kann je nach Bedarf über den im Fond 10 umgeklappten Einzelsitz 9B gezogen werden.

Bei einer abgewandelten Ausgestaltung kann die Tischplatte über den im Fond 10 umgeklappten Einzelsitz 9A gezogen werden. Entsprechend kann bei einer abgewandelten Ausgestaltung, bei der das Freizeitfahrzeug 1 eine segmentweise umklappbare Rücksitzbank 9 hat, ein Segment 33 der Rücksitzbank 9 umgeklappt werden und anschließend die Tischplatte 25 in Fahrtrichtung 26 über das Segment 33 der Rücksitzbank 9 gezogen werden.

Die Erfindung ist nicht auf die beschriebenen Ausführungsformen beschränkt.

## Patentansprüche

1. Freizeitfahrzeug (1), insbesondere Wohnmobil und/oder Campervan und/oder ein auf einem Hochdachkombi basierendes Freizeitfahrzeug, mit einem Heckraum (15) und einer im Heckraum (15) angeordneten Ablageeinrichtung (2),
**dadurch gekennzeichnet,**
**dass** eine Tischplatte (25) vorgesehen ist, die in der Ablageeinrichtung (2) geführt angeordnet ist, und dass die Tischplatte (25) in und/oder entgegen der Fahrtrichtung (26) zumindest teilweise aus der Ablageeinrichtung (2) ziehbar ist, wobei die Tischplatte (25) in der Ablageeinrichtung (2) geführt bleibt.

2. Freizeitfahrzeug nach Anspruch 1,
**dadurch gekennzeichnet,**
**dass** zumindest eine Schiene (27, 28), insbesondere eine Profilschiene (27, 28), vorgesehen ist, die an der Ablageeinrichtung (2) befestigt ist, und dass die Tischplatte (25) an der zumindest einen Schiene (27, 28) geführt ist.

3. Freizeitfahrzeug nach einem der vorhergehenden Ansprüche,
**dadurch gekennzeichnet,**
**dass** die Tischplatte (25) aus der Ablageeinrichtung (2) entnehmbar ist.

4. Freizeitfahrzeug nach Anspruch 3,
**dadurch gekennzeichnet,**
**dass** die Tischplatte (25) in einem vor einer Rücksitzbank (9) oder vor Einzelsitzen (9A, 9B) im Fond (10) vorgesehenen vorderen Innenraum (17) zumindest näherungsweise horizontal anordenbar ist.

5. Freizeitfahrzeug nach Anspruch 3 oder 4,
**dadurch gekennzeichnet,**
**dass** die Tischplatte (25) über einer Mittelkonsole (30) anordenbar ist.

6. Freizeitfahrzeug nach Anspruch 5,
**dadurch gekennzeichnet,**
**dass** die Tischplatte (25) zumindest mittelbar an der Mittelkonsole (30) befestigbar ist.

7. Freizeitfahrzeug nach Anspruch 6,
**dadurch gekennzeichnet,**
**dass** zum Befestigen der Tischplatte (25) an der Mittelkonsole (30) in die geöffnete Mittelkonsole (30) eine Befestigungseinrichtung eingefügt wird, mittels der der die Tischplatte (25) an der Mittelkonsole (30) abgestützt ist, und dass die Tischplatte (25) mit der Befestigungseinrichtung lösbar verbunden ist.

8. Freizeitfahrzeug nach einem der vorhergehenden Ansprüche,
**dadurch gekennzeichnet,**
**dass** ein Fahrersitz (7) und/oder ein Beifahrersitz (8) entgegen der Fahrtrichtung (26) anordenbar ist und dass zumindest ein Segment (33) einer Rücksitzbank (9) oder zumindest ein Einzelsitz (9A, 9B) im Fond (10) und der Fahrersitz (7) und/oder der Beifahrersitz (8) eine Sitz-Ess-Gruppe (35), insbesondere eine Halbdinette (35), bilden.

9. Freizeitfahrzeug nach Anspruch 8,
**dadurch gekennzeichnet,**
**dass** der Fahrersitz (7) und/oder der Beifahrersitz (8) mittels eines Dreh-Heb-Mechanismus (40) aus einer Stellung (41) in der Fahrtrichtung (26) in eine Stellung (42) entgegen der Fahrtrichtung (26) verstellbar ist.

10. Freizeitfahrzeug nach einem der vorhergehenden Ansprüche,
**dadurch gekennzeichnet,**
**dass** eine segmentweise umklappbare Rücksitzbank (9) oder Einzelsitze (9A, 9B) im Fond (10) vorgesehen sind und dass die Tischplatte (25) über ein umgeklapptes Segment (33) der Rücksitzbank (9) oder einen im Fond (10) umgeklappten Einzelsitz (9A, 9B) ziehbar ist.
